# EUROPÄISCHE PATENTSCHRIFT

(11) **EP 0 935 085 B1**
(45) Veröffentlichungstag und Bekanntmachung des Hinweises auf die Patenterteilung: **07.04.2004**
(21) Anmeldenummer: 99101937.3
(22) Anmeldetag: 29.01.1999
(51) Int. Cl.: F16J 15/12, F16L 23/18

(54) **Schichtstoffdichtung mit Bördel**
Laminate seal with edge member
Joint d'étanchéité stratifié avec bordure

(30) Priorität: 04.02.1998 DE 19804289
(43) Veröffentlichungstag der Anmeldung: 11.08.1999
(73) Patentinhaber: SGL CARBON AG, 65203 Wiesbaden (DE)
(72) Erfinder: Mederle, Otto, 86405 Meitingen (DE); Öttinger, Oswin, Dr.-Ing., 86405 Meitingen (DE)

(56) Entgegenhaltungen:
- EP-A- 0 303 068
- DE-A- 3 226 661
- DE-A- 3 702 452
- US-A- 4 795 166
- US-A- 5 618 050

## Beschreibung

Die Erfindung betrifft eine Flachdichtung aus 1. mindestens einem Innen- oder einem Außenbördel oder aus mindestens einem Innen und einem Außenbördel und 2. einem Dichtungskörper, wobei der Innenbördel jeweils am Übergang zu jedem der durch die Dichtung abzudichtenden Hohlräume positioniert ist und bei der der den mindestens einen Bördel aufweisende Dichtungskörper aus einem druckfesten Kern, der gegenüber Temperaturen von mindestens 150 °C dauerbeständig ist und aus einem Belag, der sich auf den beiden flachen Außenseiten des Kerns befindet, besteht.

Flachdichtungen werden in der Technik zum Abdichten von fluide Produkte enthaltenden Räumen wie Rohrleitungen, Behältern, Reaktionsräumen etc. an Stellen verwendet, an denen diese Räume mindestens einen Übergang zu einem anderen, materiell von dem ersten Raum getrennten Konstruktions- oder Funktionsteil der technischen Anordnung, zu der sie gehören, haben. Ihre Funktion ist es, bei Vorliegen von Druckdifferenzen zwischen dem Behälterinneren und dem Raum außerhalb des Behälters ein Austreten von Fluiden aus einem solchen Behälter oder Behältersystem oder ein unerwünschtes Eindringen von Fluiden in den Behälter oder das Behältersystem möglichst weitgehend zu verhindern.

Außerdem sollen auch bei Abwesenheit von Druckdifferenzen Stoffaustauschvorgänge zwischen dem Behälterinneren und dem Behälteräußeren durch Diffusion so weit wie möglich unterbunden werden. Aus wirtschaftlichen Gründen, aus Gründen der Gesundheitsfürsorge und wegen Erfordernissen des Umweltschutzes sind die Anforderungen an die Leistungsfähigkeit und speziell die Dichtigkeit von Flachdichtungen in der letzten Zeit ständig gestiegen und dieser Prozeß geht weiter. Waren in der Vergangenheit Leckagegrenzwerte im Bereich von 0,01 mg/(m s) noch ausreichend, so werden heute Werte für den Bereich der Mineralölverarbeitung von 0,0001 mg/(m s) diskutiert. Derartig hohe Anforderungen an die Dichtigkeit können mit den üblichen Einstoff-, bzw. einlagigen Flachdichtungen in der Regel nicht mehr erfüllt werden. Es sind auch Dichtungssysteme bekannt, die aus mehreren Schichten verschiedener Materialien aufgebaut sind. In der US-Patentschrift 5,128,209 ist ein Dichtungswerkstoff beschrieben, der aus Lagen aus einem Fluorpolymer, Graphitfolien und Metallfolien besteht, wobei die Lagen miteinander durch einen Klebstoff verbunden sind. Die der Entwicklung dieses Dichtungswerkstoffes zugrundeliegende Aufgabe war es, eine Dichtung mit guter Handhabbarkeit und einem guten Rückfederungsvermögen zu schaffen. Das Kriterium "Dichtigkeit" war hier von untergeordneter Bedeutung. Die Lagen aus dem Fluorpolymeren bestehen aus porösem und damit für Fluide durchlässigem Material. Sie verleihen der aus den Graphitfolien und den Fluorpolymerfolien bestehenden Komponente des Verbundwerkstoffs eine größere Festigkeit, Zähigkeit, Zugfestigkeit und eine bessere Handhabbarkeit.

Ein wesentlicher Nachteil dieses Dichtungswerkstoffs ist die Durchlässigkeit der Fluorpolymerfolien für Fluide in Verbindung mit dem Vorhandensein von Klebern als verbindendes Mittel zwischen den Schichten. Die Fluorpolymerfolien tragen zur Dichtigkeit des Gesamtsystems praktisch nichts bei, was sich besonders bei Dichtungen für hohe und höchste Dichtigkeitsanforderungen negativ auswirkt. Die Kleber können besonders bei mit hohen Drücken oder Spannungen belasteten Dichtungen eine Schwachstelle sein, weil auf ihnen die Lagen des Schichtstoffes gleiten können, was letztlich zur Funktionsunfähigkeit der Dichtung führen kann oder, und dies besonders im Zusammenwirken mit höheren Temperaturen, sich in der Kleberschicht feine Risse bilden können, die die Dichtwirkung beeinträchtigen. Das Deutsche Gebrauchsmuster G 92 08 943.7 offenbart Packungsringe für Stopfbuchspackungen, die aus Schichten aus Graphitfolien und Metallfolien bestehen und die als Diffusionssperre eine zumindest teilweise Ummantelung mit einer Folie aus Polytetrafluorethylen haben. Die Polytetrafluorethylenfolien können auch auf die Graphitringe aufgesintert sein. Die Mechanismen, die das Abdichten in Stopfbuchspackungen bewirken, sind jedoch auf Flachdichtungen nicht ohne weiteres übertragbar. Eine Stopfbuchspackung ist in ihrem Packungssitz vollkommen gekammert und wird durch Anziehen der Packungsbrille an die Wände des sie umgebenden Packungsraumes gepreßt. Fließprozesse des Packungsringes sind hier, im Gegensatz zu Flachdichtungen, vorgesehen und können nur so weit gehen, wie dies die sie umgebende Kammer zuläßt. Die in der Packung angeordneten Metallringe dienen vor allem als Diffusionsbarrieren zwischen den Graphitlagen. Die Graphitlagen weisen freie Diffusionswege in allen Richtungen auf. In Flachdichtungen liegen andere Verhältnisse vor. Sie sind nicht vollständig gekammert und dürfen beim Anspannen der sie nach oben und unten begrenzenden Dichtflächen wie z.B. Flanschen keine oder nur eine sehr begrenzte Neigung zum Fließen haben. Für die Leckagerate solcher Dichtungen sind die feinen Kanäle und Diffusionswege maßgebend, die diese Dichtungen in horizontaler Richtung durchziehen. In Dichtungen, die einen nur aus Kunststoffen oder aus Metall aufgebauten Kern haben, liegen solche Diffusionswege praktisch nicht vor. Dichtungen dieser Art können die an sie gestellten dichtungstechnischen Anforderungen jedoch nicht oder nur unzureichend erfüllen. In Dichtungen mit einem reinen Kunststoffkern fließt der Kunststoffkern unter Druck und es fehlt ihm ein ausreichendes Rückfederungsvermögen. In Dichtungen mit einem reinen Metallkern fließt der Metallkern zwar nicht, er hat aus dichtungstechnischer Sicht jedoch überhaupt kein Rückfederungsvermögen und damit keine zuverlässige Dauerdichtwirkung. Zur Überwindung dieser Schwierigkeiten hat man deshalb als Dichtungskerne andere Materialien, wie Kunststoffe mit einer gewissen Elastizität oder Spezialgummis, z.B. Nitril-Butadien-Kautschuk, die mit Füllstoffen und durch die Einlagerung von verstärkenden Fasern wie Aramid- oder Kohlenstoffasern einerseits verstärkt und andererseits fließ- oder kriechfest gemacht worden sind oder auch anorganische Materialien wie z.B. Graphitfolien oder -Laminate verwendet. Aber auch Dichtungskerne dieser Art haben Diffusionskanäle wie z.B. am Beispiel von Graphitfoliendichtungen in EP 0 676 570 A1 dargestellt worden ist. Zusammenfassend kann festgestellt werden, daß die bekannten Flachdichtungen den Erfordernissen der modernen Dichtungstechnik in Bezug auf Dichtigkeit und Druckfestigkeit nicht voll entsprechen und verbesserungsbedürftig sind.

Es war deshalb die Aufgabe der dieser Patentanmeldung zugrundeliegenden Erfindung, eine Flachdichtung von großer Druckfestigkeit zu schaffen, die für Dauerbetriebstemperaturen von mindestens 150°C geeignet ist und mit der verbesserte, d.h. kleinere Leckagewerte als 0,01 mg/(m s) erreicht werden.

Die Aufgabe wird mit einer Flachdichtung gemäß dem Oberbegriff des Patentanspruchs 1 gelöst, die dadurch gekennzeichnet ist, daß der auf dem Kern des Dichtungskörpers befindliche Belag die flachen Außenseiten des Kerns vollständig bedeckt, aus einer gasdichten Folie aus einem organischen Polymeren mit einer Dauertemperaturbeständigkeit von mindestens 150°C besteht und daß der Dichtungskörper so von dem mindestens einen Bördel umfaßt ist, daß die Verbindung zwischen der gasdichten Folie und dem mindestens einen Bördel gasdicht ist.

Die abhängigen Patentansprüche geben Ausgestaltungen und vorteilhafte Varianten der Erfindung wieder.

Die den Kern des Dichtungskörpers bedeckenden Polymerfolien haben außer ihrer geringen Permeabilität gegenüber Fluiden noch eine weitere vorteilhafte Eigenschaft. Infolge ihrer guten Fließfähigkeit unter Druck passen sie sich den Unebenheiten und Verletzungen, die an den Flächen, an denen sie dichtend anliegen, vorhanden sind, hervorragend an und bewirken so auch gegenüber diesen eine ausgezeichnete Abdichtung. Wenn sie dabei in genügend geringer Dicke verwendet werden, fällt ihre an sich für Dichtungen ungünstige Neigung zum Kriechen und ihre geringe Fähigkeit zum Rückfedern nicht ins Gewicht, da die dadurch hervorgerufenen negativen Effekte von dem Kern, der wie später gezeigt werden wird, ein gutes Rückfederungsvermögen hat, mehr als kompensiert werden.
Die den Schichtstoff an den beiden Flachseiten begrenzenden und vollständig bedeckenden Polymerfolien müssen eine Dauertemperaturbeständigkeit von mindestens 150°C haben. Vorzugsweise haben sie eine Dauertemperaturbeständigkeit von mindestens 200°C und besonders bevorzugt eine Dauertemperaturbeständigkeit von 250°C. Dauertemperaturbeständigkeit im Sinne dieser Erfindung bedeutet, daß die jeweilige Folie bei der angegebenen Temperatur an Luft nicht schmilzt oder sich merklich zersetzt. Alle Folien, die diese Merkmale aufweisen, sind als Bestandteil des erfindungsgemäßen Schichtstoffes geeignet. Bevorzugt bestehen die Folien jedoch aus einem Material aus der Gruppe Polyaryletheretherketon, Polyaryletherketon, Polyphenylensulfid, Polyarylsulfon, Polyethersulfon, Polyimid, Polyamidimid, fluorhaltige Polymere. Besonders bevorzugt sind fluorhaltige Polymere aus der Gruppe Polytetrafluorethylen, Polytrifluorchlorethylen, Tetrafluorethylen-Hexafluorpropylen-Copolymerisat, Copolymerisate von Tetrafluorethylen mit Perfluoralkylvinylether, Copolymerisate von Ethylen und Tetrafluorethylen, Polyvinylidenfluorid, wobei von diesen Folien wieder solche bevorzugt sind, die aus perfluorierten organischen Polymeren bestehen. Die in dem Schichtstoff enthaltenen Polymerfolien haben eine Dicke im Bereich von 0,005 bis 1,0 mm, wobei Dicken im Bereich von 0,03 bis 0,2 mm bevorzugt sind.

Nach einer ersten Variante der Erfindung kann der Kern des Dichtungskörpers aus einem thermoplastischen Kunststoff oder einem Elastomer bestehen, die durch organische oder anorganische Fasern, bevorzugt Fasern mit einer Länge von nicht mehr als 20 mm Länge verstärkt sind. Wenn die Druckfestigkeit der so verstärkten Körper aus Kunststoff oder Elastomer nicht ausreicht, kann diese zusätzlich durch einen Gehalt an einem Füllstoff wie beispielsweise Siliciumdioxid, Aluminiumoxid, Kohlenstoff, Graphit in Pulverform oder Stein-, Keramik- oder Holzmehl auf das erforderliche Maß gebracht werden. Die verstärkenden Fasern des Kerns sind vorzugsweise Aramid-, Kohlenstoff-, Graphit-, Glas-, Keramik oder Metallfasern. Der thermoplastische Kunststoff ist ein Kunststoff aus der Gruppe Polyaryletheretherketon, Polyaryletherketon, Polyphenylensulfid, Polyarylsulfon, Polyethersulfon, Polyimid, Polyamidimid, fluorhaltige Polymere und insbesondere ein Kunststoff aus der Gruppe Polytetrafluorethylen, Polytrifluorchlorethylen, Tetrafluorethylen-Hexafluorpropylen-Copolymerisat, Copolymerisate von Tetrafluorethylen mit Perfluoralkylvinylether, Copolymerisate von Ethylen und Tetrafluorethylen, Polyvinylidenfluorid und als Elastomer wird vorzugsweise ein Stoff aus der Gruppe Nitril-Butadien-Kautschuk, Styrol-Butadien-Kautschuk, Naturkautschuk, Ethylen-Propylen-Terpolymer, Ethylen-Vinylacetat-Copolymer, Fluorkautschuk, Fluorsiliconkautschuk, Vinyl-haltiges Dimethylpolysiloxan, Acrylatkautschuk, Ethylen-Acrylatkautschuk verwendet.

Nach einer zweiten und bevorzugten Variante der Erfindung besteht der Kern des Dichtungskörpers aus einem anorganischen und druckbeständigen Material aus der Gruppe, Graphit, Glimmer. Nach einer besonders bevorzugten Variante besteht er aus einer Graphitvariante, die aus expandiertem Graphit hergestellt worden ist, die in Folien oder Laminatform verfügbar und jedem Fachmann wohlbekannt ist oder er enthält eine solche Graphitvariante. Unter dem Begriff Graphitfolien werden im Sinne dieser Erfindung Graphitfolien wie auch Graphitlaminate verstanden. Sie werden nach bekannten Verfahren durch Zusammenpressen oder Kalandrieren von expandiertem, sogenanntem wurmförmigen Graphit erhalten. Expandierter Graphit wird durch plötzliches Zersetzen von Graphitsalzen wie Graphithydrogensulfat bei hohen Temperaturen erzeugt. Die Herstellung von wurmförmigem Graphit kann beispielsweise gemäß US 4,091,083 geschehen.

Die für das Herstellen von erfindungsgemäßen Dichtungskörpern verwendeten und in diesen Dichtungskörpern befindlichen Graphitfolien können eine Rohdichte im Bereich von 0,1 g/cm³ bis 1,8 g/cm³ aufweisen, wobei die in den Dichtungskörpern befindlichen Graphitfolien eher Rohdichten haben, die im mittleren und oberen Bereich der angegebenen Rohdichtewerte liegen. Sie haben vorzugsweise einen Kohlenstoffgehalt im Bereich von 90 bis 99,95 Gewichtsprozent. Ihre Dicke liegt im Bereich von 0,1 mm bis 4 mm. Bei der Verwendung von Graphitfolien allein kann der Kern des Dichtungskörpers aus nur einer Lage oder aus mehreren übereinander geschichteten Lagen Graphitfolien bestehen.

Nach einer anderen und ebenfalls bevorzugten Variante der Erfindung besteht der Kern aus übereinander im Wechsel und parallel angeordneten Lagen von 1. einem anorganischen, hochtemperaturbeständigen, druckfesten Stoff und 2. aus Metallfolien. Es ist vorteilhaft, wenn in dem Kern die Metallfolien mit den Lagen aus dem anorganischen, hochtemperaturbeständigen und druckfesten Stoff verbunden sind. Diese Verbindung kann durch einen Kleber bewirkt werden, der bei Temperaturen oberhalb von 150°C beständig ist. Gemäß einer weiterentwickelten Variante dieser Ausführung des Kerns, bestehen die beiden nach außen zeigenden Lagen, d.h., es besteht die obere und die untere Lage des Kerns aus je einer Metallfolie, die die ihnen zugewandten Flachseiten der ihnen benachbarten Lagen des Kerns vollständig bedecken.

Bei einer Ausführungsform dieser Variante besteht der anorganische, hochtemperaturbeständige und druckfeste Stoff aus Glimmer. Bei einer besonders bevorzugten Ausführungsform dieser Variante der Erfindung besteht der anorganische, hochtemperaturbeständige und druckfeste Stoff aus mindestens einer Graphitfolie. Für besonders leistungsfähige Dichtungen sind die Verbindungen der Graphitfolien mit den Metallfolien und es sind die Verbindungen der Metallfolien mit den Polymerfolien des Belags frei von Klebstoffen. In allen Ausführungsformen, die Graphit- und Metallfolien enthalten, können die nicht mit den Polymerfolien des Belags verbundenen Metallfolien als Spießbleche ausgebildet sein, bei denen die Spieße sich entweder nur nach einer Seite oder nach beiden Seiten erstrecken. vorzugsweise ist nur die die Mitte des Kerns bildende Metallfolie ein Spießblech mit beidseitigen Spießen, die in den beiden benachbarten Graphitfolien verankert sind. Nach einer Methode zum klebstofffreien Verbinden von Metall- und Graphitfolien werden die beiden Folien an den Flächen, mit denen sie verbunden werden sollen, in Kontakt gebracht und unter Anwendung von Druck und Temperaturen im Bereich von 150 bis 300°C zusammengepreßt. Bei kleineren Flächenerstreckungen kann dies in Gesenkpressen geschehen, bei großen Bahnen werden heizbare Doppelbandpressen oder Walzenstühle verwendet. Wenn man eine äußerst fest haftende Verbindung der Metall- mit den Graphitfolien herstellen will, bedient man sich als zweiter Methode, die bevorzugt wird, des Verfahrens gemäß EP 0 616 884 B1, bei dem die Flächen, die verbunden werden sollen, in dünnst möglicher Schicht mit einer an sich als Trennmittel wirkenden Substanz belegt werden und die Verbindung durch Druck und Temperatureinwirkung hergestellt wird.

Eine wegen ihrer begrenzten Zahl von Lagen als vorteilhaft angesehene Flachdichtung dieser Erfindung hat einen Dichtungskörper aus einer mittig angeordneten Metallfolie, zwei mit den Flachseiten dieser Metallfolie verbundenen Lagen Graphitfolie und zwei mit den nach außen zeigenden Flachseiten der beiden Graphitfolien verbundenen Metallfolien, die auf ihren nach außen zeigenden Flachseiten vollständig mit einer Polymerfolie verbunden sind. Eine andere Dichtung dieser Art hat einen Dichtungskörper aus einer mittig angeordneten Graphitfolie, die auf ihren beiden Flachseiten mit je einer Metallfolie verbunden ist, deren nach außen weisende Oberflächen mit einer Polymerfolie vollständig bedeckt sind.

Der Kern des Dichtungskörpers ist mit dem Belag in jedem Fall verbunden. Zum Herstellen dieser Verbindung wird. entweder ein Kleber verwendet oder es wird eine kleberfreie Verbindung hergestellt. Besonders beim Verbinden von Polyimidfolien mit dem Kern werden Kleber verwendet. Als Kleber können handelsübliche Kleber, die bei Temperaturen oberhalb 150°C stabil sind wie Siliconkleber oder Acrylatkleber eingesetzt werden. Da die Kleberschichten in den Dichtungen stets eine gewisse Schwachstelle darstellen, weil sich in ihnen feine, als Diffusionskanäle wirkende Risse ausbilden können oder weil Kleber, die nicht zu duroplastischen Netzwerken aushärten, als Gleitmedium für die miteinander verbundenen Materiallagen unter hohem Druck und gegebenenfalls hohen Temperaturen wirken, werden kleberfreie Verbindungen bevorzugt. Eine solche kleberfreie Verbindung zwischen dem Kern und dem Belag entsteht durch Zusammenpressen der den Belag bildenden Polymerfolie mit mindestens einer Lage des Kerns oder einer Folie, die später Bestandteil eines Kerns werden wird wie beispielsweise einer Metallfolie oder einer Graphitfolie, unter einer Temperatur, bei der die Polymerfolie erweicht und einem Druck, unter dem die Verbindung dann herstellbar ist. Dabei verschweißt der Kern mit der Polymerfolie. Dieses Verfahren ist auch für Folien aus Polytetrafluorethylen anwendbar. Für das Herstellen derartiger Verbindungen sind sowohl Gesenk- als auch Doppelband- oder Walzenpressen geeignet. Zum rationellen Arbeiten bedient man sich vorteilhafterweise Preßeinrichtungen, in denen mindestens eine der zu verbindenden Folien, z.B. über temperierte Walzen, erhitzt werden kann und in denen im kontinuierlichen Verfahren der zum Verbinden erforderliche Druck aufgebracht werden kann.

Die Metallfolien des Dichtungskörpers können aus jedem für Dichtungszwecke verwendbaren und in Folienform herstellbaren Metall bestehen. Bevorzugt werden jedoch Metallfolien aus Aluminium, Aluminiumlegierungen, Kupfer und Kupferlegierungen und aus einem korrosionsfesten Metall oder einer korrosionsfesten Metallegierung wie z.B. Folien aus Edelstahl verwendet. Die Metallfolien haben vorzugsweise eine Dicke im Bereich von 0,005 bis 1 mm. In besonderen Fällen kann die Dicke auch außerhalb dieses Bereichs liegen.

Die vorteilhaften Eigenschaften des Dichtungskörpers kommen in der Flachdichtung nur dann optimal zur Geltung, wenn mindestens der oder die Innenbördel so ausgeführt und angebracht sind, daß sie den Dichtungskörper vollständig und gasdicht umschließen. Das Anbringen des oder der Bördel kann mit den bekannten Einrichtungen geschehen. Die Bördel können aus Metall oder aus einem geeigneten Kunststoff bestehen. Vorzugsweise werden Bördel aus einem korrosionsfesten Metall oder aus einer korrosionsfesten Metalllegierung verwendet. Bördel aus Kunststoff bestehen bevorzugt aus einem perfluorierten organischen Polymeren, wobei hier zum Herstellen der Gasdichtigkeit eine stoffschlüssige Verbindung zwischen dem Bördel und der Polymerfolie des Belags durch Verschweißen oder Kontaktkleben vorteilhaft ist.

Erfindungsgemäße Flachdichtungen weisen mindestens eine Leckagerate gemäß DIN 3535 von kleiner/gleich 0,1 ml/min auf.

Nachstehend wird die Erfindung anhand der Figuren 1 bis 12 durch lediglich schematische Wiedergaben beispielhaft weiter erläutert.

Es zeigen:
- Figur 1,: einen Teilquerschnitt durch eine Flanschverbindung in einer Rohrleitung mit einer Flachdichtung mit Innenbördel;
- die Figuren 2a und 2b,: einen Ausschnitt aus dem in Fig. 1 dargestellten Teilquerschnitt, der die Flachdichtung in dichtendem Zustand zeigt. Die in Figur 2a wiedergegebene Dichtung ist mit einem erfindungsgemäßen Belag ausgeführt, während die in Figur 2b dargestellte Dichtung nicht unter die Erfindung fällt.
- Figuren 3 bis 12,: Teilquerschnitte durch verschiedene Ausführungsformen erfindungsgemäßer Flachdichtungen.

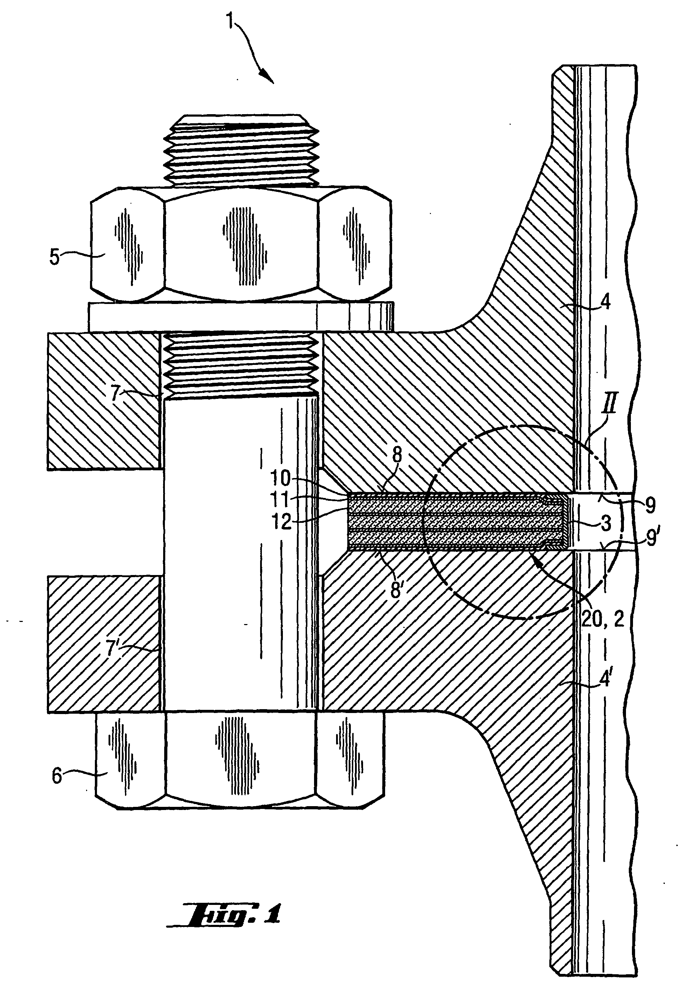

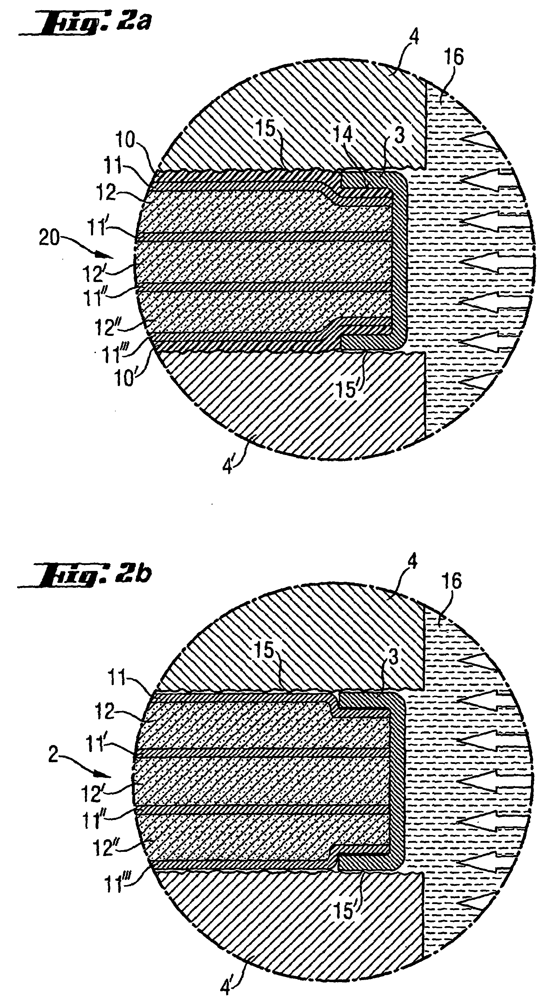

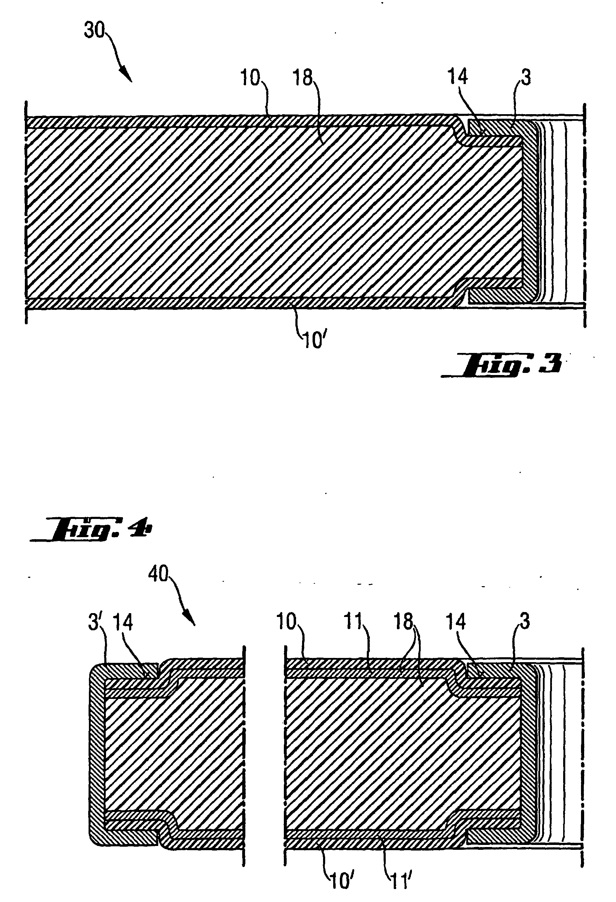

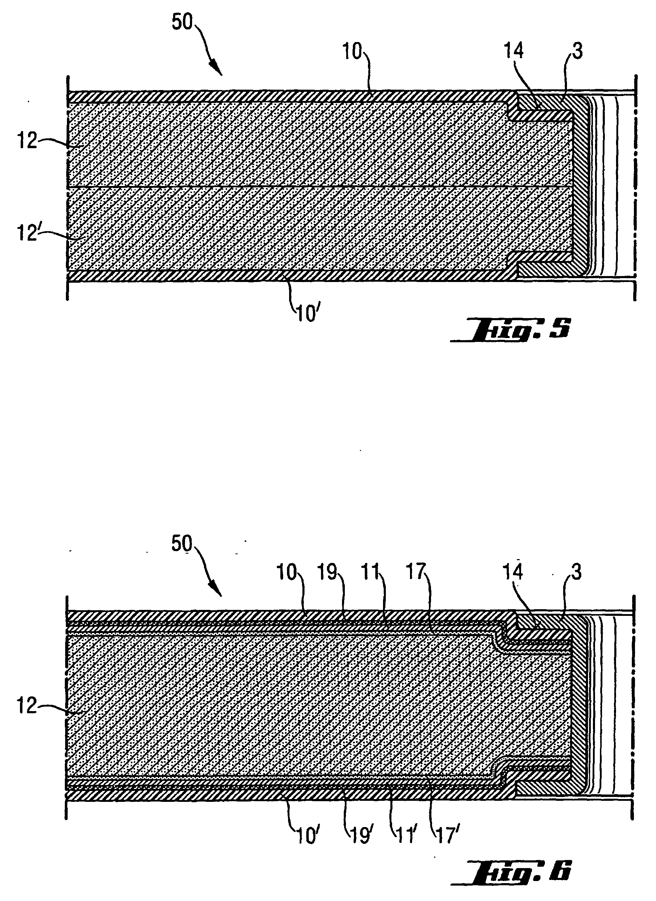

Figur 1 stellt einen Teilquerschnitt durch eine Flanschverbindung 1 in einer Rohrleitung mit einer Flachdichtung 2, 20 mit Innenbördel 3 dar. Zwischen den beiden Flanschen 4, 4' befindet sich die Flachdichtung 2, 20. Durch Anspannen von mit Muttern 5 versehenen Bolzenschrauben 6, die durch Bohrungen 7, 7' der Flansche 4, 4' gesteckt sind, werden die Flansche 4, 4' aufeinander zu bewegt und es wird dabei auf die Flachdichtung 2, 20 ein solcher Druck ausgeübt, daß die Flachseiten 8, 8' der Dichtung 2, 20 dichtend an die Dichtungsflächen 9, 9' der Flansche 4, 4' angepreßt werden.

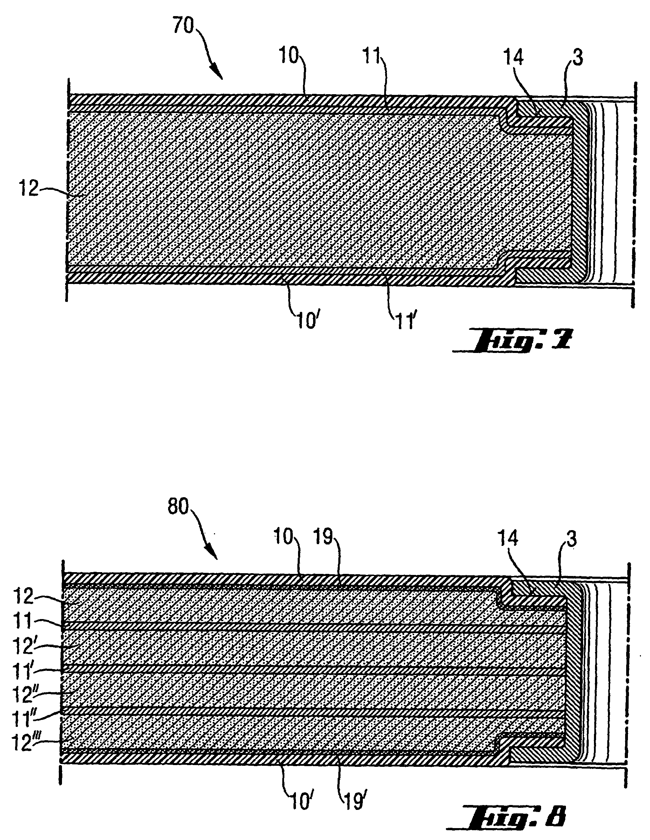

Die Figuren 2a und 2b geben Ausschnitte aus dem in Fig. 1 dargestellten Teilquerschnitt wieder, der die Flachdichtung 2, 20 in dichtendem Zustand zeigt.

In Fig. 2a liegt eine erfindungsgemäße Flachdichtung 20 vor. Ihr Dichtungskörper besteht, von außen nach innen gesehen, aus einem Belag 10 aus einer Polymerfolie, der mit einer Metallfolie 11 verbunden ist. Die Metallfolie 11 ist auf ihrer anderen Seite mit einer Graphitfolie 12 und diese nach innen zu wieder mit einer Metallfolie 11' verbunden. Die mittlere Lage der Dichtung 20 besteht aus einer Graphitfolie 12', die auf ihren beiden Flachseiten mit je einer Metallfolie 11', 11'' verbunden ist. Die Metallfolie 11'' ist auf ihrer anderen Flachseite mit einer Graphitfolie 12'' und diese auf ihrer nach außen gekehrten Flachseite mit einer Metallfolie 11''' verbunden. Die nach außen zeigende Flachseite der Metallfolie 11''' ist mit einer Polymerfolie 10' verbunden. Die Flachdichtung 20 wird auf ihrem ganzen Innenumfang von einem Innenbördel 3 umfaßt. Dieser Innenbördel ist an der Ober- und der Unterseite der Dichtung 20 mit dem Belag 10, 10' gasdicht verbunden 14. Die Flachdichtung 20 ist symmetrisch aufgebaut. Die der Flachdichtung 20 zugekehrten Flächen der Flansche 4, 4' weisen Unebenheiten 15, 15' auf, in die der fließfähige aber dünne, aus einem thermoplastischen Polymeren bestehende Belag 10, 10' unter dem Anpreßdruck der Flansche 4, 4' eingedrungen ist und damit alle Leckagewege für das Medium 16, gegen das gedichtet werden soll, zuverlässig dichtend versperrt.

Figur 2b zeigt eine nicht unter die Erfindung fallende Dichtungsanordnung, die, was den Kern des Dichtungskörpers der Flachdichtung 2 betrifft, den in Fig. 2a beschriebenen Verhältnissen gleicht. Das heißt, der Dichtung 2 in dieser Fig. 2b fehlt der vergleichsweise anschmiegsame, gasdichte Belag 10, 10' der unter Fig. 2a beschriebenen Dichtung 20. Ihre 2 dichtenden Außenflächen sind Teil von Metallfolien 11, 11'''. Diese Metallfolien lassen sich beim Anspannen der Flansche 4, 4' nicht in die Unebenheiten 15, 15' der Flansche 4, 4' einpressen. Die Folge davon sind Leckagen, die insbesondere bei großen Innendrücken des Mediums 16, gegen das abgedichtet werden soll, zu groß werden können.

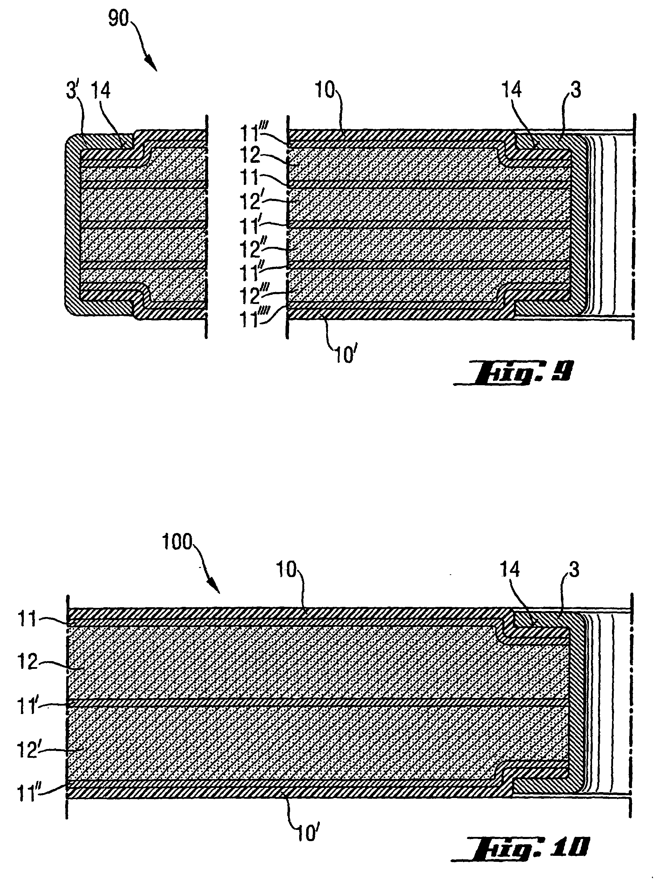

Figur 3 gibt eine Fachdichtung 30 wieder, die aus einem Kern 18 aus Butadien-Nitril-Kautschuk, der mit Aramid-Kurzschnittfasern verstärkt ist und der zur Verringerung der Fließneigung Graphitplättchen als Füllstoff enthält, besteht. Der Kern ist mit Belägen 10, 10' aus Polyetherketonfolien verbunden. Die Dichtung 30 weist einen Innenbördel 3 auf, der den gesamten Innenumfang der Dichtung 30 umfaßt und mit den Belägen 10, 10' gasdicht 14 verbunden ist.

Figur 4 stellt eine Flachdichtung 40 dar, bei der der Kern 18 des Dichtungskörpers aus 1. einer Lage Vinylidenfluorid-Hexafluorpropylen-Copolymerisat, das durch eingebundene Graphitkurzfasern verstärkt ist und zusätzlich Graphitpulver als Füllstoff enthält und 2. aus zwei Metallfolien 11, 11' aus Aluminium, die die Lage aus dem Vinylidenfluorid-Hexafluorpropylen-Copolymerisat auf beiden Flachseiten vollständig bedecken, besteht. Die beiden nach außen zeigenden Flachseiten der Aluminiumfolien 11, 11' sind klebstofffrei mit Belägen 10, 10' aus Polyetherketonfolien verbunden. Der Dichtungskörper wird auf der Innenseite der Dichtung von einem Innenbördel 3 und auf der Außenseite von einem Außenbördel 3' umfaßt. Beide Bördel bilden mit den Belägen 10, 10' des Dichtungskörpers eine gasdichte Verbindung 14.

In Figur 5 ist eine Flachdichtung 50 mit einem den Dichtungskörper gasdicht 14 einfassenden Innenbördel 3, der aus einem Copolymer aus Tetrafluorethylen mit Perfluoralkylvinylether besteht, dargestellt. Der Kern des Dichtungskörpers besteht aus zwei miteinander durch Verpressen verbundenen Laminaten 12, 12' die aus expandiertem Graphit hergestellt worden sind. Dieser Kern aus Graphit ist an seiner oberen und an seiner unteren Flachseite klebstofffrei mit Belägen 10, 10' aus Polytetrafluorethylenfolien verbunden.

Figur 6 zeigt eine Flachdichtung 60 mit einer inneren Lage aus einem Graphitlaminat 12. Die beiden Flachseiten dieses Laminats 12 sind mit einem Epoxidharzkleber 17, 17' mit Metallfolien 11, 11' aus Kupfer verbunden. Das Graphitlaminat 12 und die beiden Metallfolien 11, 11' bilden den Kern des Dichtungskörpers. Die beiden freien Flachseiten dieses Kerns sind mittels einer Haft- oder Klebefolie 19, 19' aus einem Copolymer von Polytetrafluorethylen mit Perfluoralkylvinylether mit je einem Belag 10, 10' aus einer Polyimidfolie verbunden. Der Innenbördel 3 aus Edelstahl umfaßt den gesamten Dichtungskörper entlang seines Innenumfangs und ist gasdicht 14 mit den Belägen 10, 10' verbunden.

Figur 7 gibt eine Flachdichtung 70 wieder, die der Flachdichtung 60 in Figur 6 ähnlich ist. Der Unterschied zu der Dichtung 60 nach Fig. 6 besteht darin, daß in der Dichtung 70 die Verbindungen zwischen dem Graphitlaminat 12 und den Metallfolien 11, 11' sowie zwischen den Metallfolien 11, 11' und den Belägen 10, 10' ohne Verwendung von Klebern oder als Kleber wirkenden Folien hergestellt worden sind. Die Verbindungen wurden hier durch Anwenden von hohen Temperaturen in Verbindung mit einem geeigneten Preßdruck hergestellt.

Figur 8 zeigt eine Flachdichtung 80 mit an den Belägen 10, 10' gasdicht 14 abschließendem Innenbördel 3, deren Dichtungskörper aus einer Abfolge von 4 Lagen Graphitfolien 12, 12', 12'', 12''' und 3 Lagen Metallfolien 11, 11', 11'' aus Edelstahl besteht. Die Verbindung zwischen den Graphitfolien 12, 12', 12'', 12''' und den Metallfolien 11, 11', 11'' wurde durch Verpressen der Komponenten unter hoher Temperatur und hohem Druck hergestellt. Die beiden nach außen weisenden Flachseiten des Dichtungskörpers sind mit Belägen 10, 10' aus je einer Folie aus Polytetrafluorethylen verbunden. Als Haftvermittler zwischen den Graphitfolien 12, 12''' und den Polymerfolien 10, 10' wurde eine Folie 19, 19' aus einem Tetrafluorethylen-Perfluorpropylen-Copolymerisat verwendet. Diese Verbindung zwischen dem Graphit und dem Polymer wurde unter erhöhter Temperatur und erhöhtem Druck hergestellt.

In Figur 9 ist eine Flachdichtung (90) mit einem Innen- 3 und einem Außenbördel 3', beide aus Edelstahl, dargestellt. Die Bördel umgreifen den Dichtungskörper an seinem Innenund an seinem Außenumfang gasdicht. Das Innere des Kerns des Dichtungskörpers entspricht dem Kern des Dichtungskörpers der Flachdichtung (80) von Fig. 8. Der Kern des Dichtungskörpers der Flachdichtung 90 in dieser Figur 9 weist jedoch noch zusätzlich zwei Metallfolien 11''', 11'''' aus Edelstahl auf, die klebstofffrei mit den benachbarten Graphitfolien 12, 12''' verbunden sind. Die Edelstahlfolien 11''', 11'''' sind auf ihren nach außen weisenden Flachseiten mit Belägen 10, 10' aus Folien aus einem Copolymer aus Tetrafluorethylen und Perfluorpropylen verschweißt. Bei der Herstellung wurde zuerst die Kombination aus den Metallfolien 11''', 11'''' und den Polymerfolien 10, 10' hergestellt und es wurden dann diese kombinierten Folien auf ihren freien, metallischen Flachseiten mit dem aus den Graphit- 12, 12', 12'', 12''' und Metallfolien 11, 11', 11'' bestehenden inneren Teil des Kerns des Dichtungskörpers verbunden.

Die in Figur 10 wiedergegebene Flachdichtung 100, deren Innenbördel 3 den Dichtungskörper wiederum umgreift und mit den Belägen 10, 10' gasdicht 14 verbunden ist, weist als Kern des Dichtungskörpers zwei Graphitfolien 12, 12' und drei Metallfolien aus Edelstahl 11, 11', 11'' auf, wobei diese Folien so angeordnet sind, daß eine mittlere Metallfolie 11' mit zwei Graphitfolien 12, 12' und die zwei Graphitfolien 12, 12' auf ihren nach außen weisenden Flachseiten wiederum mit zwei Metallfolien 11, 11'' verbunden sind. Die Graphitfolien 12, 12' sind mit den Metallfolien 11, 11', 11'' nach dem Verfahren gemäß EP 0 616 884 B1 verbunden worden. Die Beläge 10, 10' des Dichtungskörpers bestehen aus zwei Polytetrafluorethylenfolien, die mit den benachbarten Metallfolien 11, 11'' thermisch verschweißt sind.

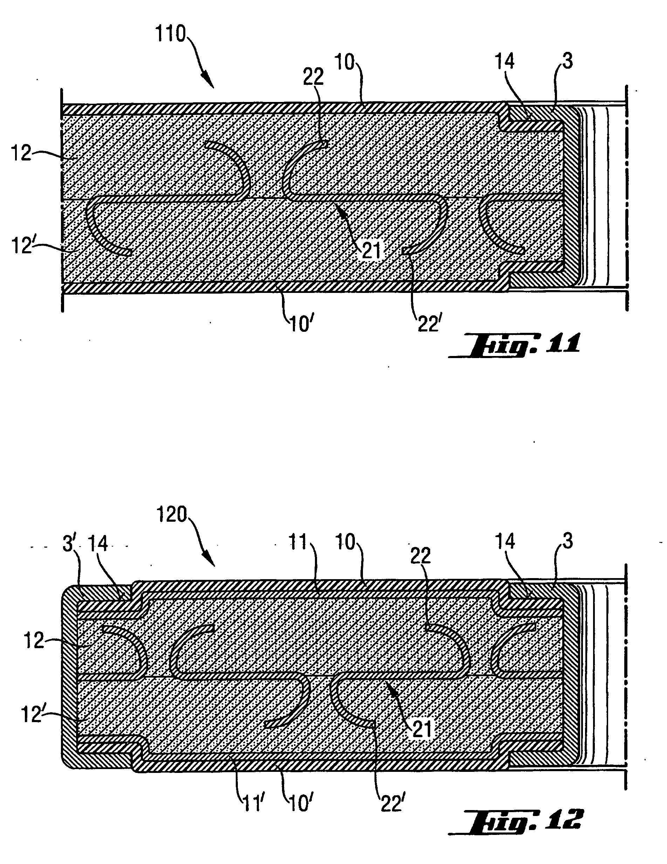

Figur 11 zeigt eine Flachdichtung 110 mit einem Dichtungskörper, dessen Kern aus zwei Graphitfolien 12, 12' und einem Spießblech 21 aus Edelstahl besteht. Die Spieße 22, 22' greifen auf beiden Seiten des Spießbleches 21 in die Graphitfolien 12, 12' ein. Der Dichtungskörper ist an seinen äußeren Flachseiten von zwei Belägen 10, 10' aus Polytetrafluorethylenfolien, die mit den ihnen benachbarten Graphitfolien 12, 12' klebstofffrei verbunden sind, begrenzt. Der Innenbördel 3 aus Edelstahl umgreift den Dichtungskörper und ist mit den Belägen 10, 10' gasdicht 14 verbunden.

In Figur 12 ist eine Flachdichtung 120 mit einem Innen- 3 und einem Außenbördel 3' in der Form eines Querschnitts durch die linke Hälfte der Dichtung 120 wiedergegeben. Die aus Edelstahl bestehenden Bördel 3, 3' übergreifen die aus je einer Polytetrafluorethylenfolie bestehenden Beläge 10, 10' entlang des gesamten Innenumfangs und des gesamten Außenumfangs der Dichtung 120 und sind entlang dieser Zonen gasdicht mit den Belägen 10, 10' verbunden. Auf diese Weise wird eine doppelte Sicherung gegen Leckagen erreicht. Sollte nämlich durch den Innenbördel 3 unter einem großen Innendruck doch etwas Gas in den Dichtungskörper eintreten, so wird der Druck des Gases beim Durchtritt durch die Dichtung 120 drastisch gesenkt werden und an der Außenbördelanordnung 3' so niedrig sein, daß an dieser Stelle kein Gas mehr austreten kann. Der Kern des Dichtungskörpers besteht aus zwei Graphitfolien 12, 12', die durch ein zwischen ihnen angeordnetes Spießblech 21, dessen Spieße 22, 22' auf beiden Seiten des Spießbleches 21 in den Graphitfolien 12, 12' verankert sind, verstärkt sind. Den Abschluß des Kerns nach außen bilden zwei Metallfolien 11, 11' aus Edelstahl, die mit den ihnen benachbarten Graphitfolien 12, 12' klebstofffrei verbunden sind. Die Flachseiten des Kerns, die Teil der Metallfolien 11, 11' sind, sind mit den zwei Belägen 10, 10' aus Polytetrafluorethylenfolien thermisch verschweißt.

### Ausführungsbeispiele:

Beispiel 1: Herstellung einer Flachdichtung mit einem Aufbau gemäß Fig. 12. Zum Herstellen des Kerns des Dichtungskörpers der Dichtung wurden zwei Bahnen 1,05 mm dicker Graphitfolien mit einer Rohdichte von 0,9 g/cm³ nach einem allgemein bekannten Verfahren in einem Walzenstuhl, dessen zwei Walzen auf eine Spaltbreite von 1,9 mm eingestellt worden war mit einem beidseitig mit Spießen versehenen Spießblech aus Edelstahl, Material-Nr. 1.4401, das eine Blechstärke von 0,1 mm hatte, so miteinander verwalzt, daß ein spießblechverstärkter Graphitfolienkörper entstand, der auf beiden Seiten je eine Graphitfolie mit einer Rohdichte von 1,0 g/cm³ aufwies. Unabhängig von dem beschriebenen Verbinden des Spießbleches mit den zwei Graphitfolien wurde eine 50 µm dicke Edelstahlfolie, Material-Nr. 1.4401 mit einer Oberflächenrauhigkeit R_{z} von ca. 10 µm mit einer ebenfalls 50 µm dicken Polymerfolie aus Polytetrafluorethylen (TFM 1700, Hersteller Fa. Dyneon, Burgkirchen, Deutschland) kleberfrei verbunden. Das Verbinden wurde in einer Heißpresse mit Preßplatten von großer Planparallelität, die hartverchromte, polierte Oberflächen hatten, die mit einem Trennmittel beschichtet waren, durchgeführt. Die beiden Preßplatten hatten eine Temperatur von ca. 370 °C. Die mit der Polymerfolie belegte Metallfolie wurde in die Presse eingelegt und 5 Minuten lang unter einem Preßdruck von 2 MPa verpreßt. Nach dem Entnehmen des Metallfolien-Polymerfolien-Verbundes aus der Presse und dem Abkühlen dieses Verbundes auf Raumtemperatur wurde die freie Metalloberfläche des Metallfolien-Graphitfolien-Verbundes für das Verbinden mit dem spießblechverstärkten Graphitfolienkörper mit einer dünnen Schicht aus einer Mischung aus einer Siloxanemulsion und einem Fettalkohol gemäß EP 0 616 884 B1 versehen. Nach dem Trocknen der Emulsion-Fettalkohol-Mischung wurde zum Herstellen des Dichtungskörpers ein Stapel folgenden Schichtaufbaus hergestellt:
1. Verbundplatte aus Polymerfolie und Metallfolie,
2. spießblechverstärkter Graphitfolienkörper,
3. Verbundplatte aus Polymerfolie und Metallfolie. In dem Stapel zeigten die Polymerfolien des Polymerfolien-Metallfolien-Verbundkörpers stets nach außen und die mit der Siloxanemulsion-Fettalkohol-Mischung belegten Metalloberflächen stets zur Graphitseite des spießblechverstärkten Graphitfolienkörpers hin. Der Stapel wurde dann in eine geheizte Gesenkpresse überführt und bei einer Temperatur von 200 °C unter einer Flächenpressung von 7 MPa ca. 1 Stunde lang verpreßt. Mit Ausschnitten aus diesem Dichtungskörper wurden Messungen durchgeführt über deren Ergebnisse weiter unten berichtet wird. Zum Herstellen von Dichtungen wurden aus dem Dichtungskörper Kreisringe mit einem Innendurchmesser von 49 mm und einem Außendurchmesser von 92 mm gestanzt. Diese Dichtungsringe wurden einerseits mit einem Innenbördel und andererseits mit einem Innen- und mit einem Außenbördel versehen. Die Bördel bestanden aus Edelstahl (Werkstoff Nr. 1.4571, Dicke 0,15 mm). Sie wurden mit einer üblichen Bördeleinrichtung hergestellt, wobei das Bördelwerkzeug so eingestellt worden war, daß zwischen den innen liegenden Flächen des oberen und des unteren Bördelrandes und den diesen Flächen gegenüberliegenden Flächen der Beläge aus Polymerfolien ein gasdichter Abschluß entstand.

Beispiel 2: In diesem Beispiel wird das Herstellen einer Flachdichtung beschrieben, dessen Dichtungskörper in seinem Aufbau dem Dichtungskörper der Flachdichtung 90 in Fig. 9 entspricht. Zunächst wurden, wie dies in Beispiel 1 bereits beschrieben worden ist, zwei Verbundkörper, die aus je einer Polymerfolie und einer Metallfolie bestanden, hergestellt. Sodann wurden die drei Metallfolien (Dicke 50 µm, Material-Nr. 1.4401), die beidseitig mit Graphitfolien verbunden werden sollten, entsprechend der Verfahrensweise von Beispiel 1 auf ihren beiden Flachseiten mit einem Belag aus einer Siloxan-Fettalkoholmischung versehen. Danach wurde ein Stapel mit folgender Schichtenabfolge hergestellt: 1. Verbundplatte aus Polymerfolie und Metallfolie, 2. Graphitfolie (Dicke 0,51 mm, Rohdichte 1,0 g/cm³), 3. Metallfolie, 4. Graphitfolie wie unter 2., 5. Metallfolie, 6. Graphitfolie wie unter 2., 7. Metallfolie, 8. Graphitfolie wie unter 2., 9. Verbundplatte aus Polymerfolie und Metallfolie. Dieser Stapel wurde wie in Beispiel 1 beschrieben, in eine geheizte Gesenkpresse überführt und dort zu einem Schichtstoff verpreßt. Aus diesem Schichtstoff wurden sodann Dichtungskörper in Ringform mit einem Innendurchmesser von 49 mm und einem Außendurchmesser von 92 mm gestanzt. Zum Herstellen von Flachdichtungen wurden die sich entlang der Innendurchmesser der Dichtungskörper erstreckenden Seiten sodann mit einem Edelstahlbördel entsprechend der in Ausführungsbeispiel 1 beschriebenen Verfahrensweise versehen.

Beispiel 3: Als Beispiel 3 wurden Flachdichtungen entsprechend Figur 11 hergestellt, deren Dichtungskörper aus einem mit einem Spießblech verstärkten Kern aus zwei Graphitfolien und einer beidseitigen Auflage aus einer Polymerfolie bestand. Dazu wurde zunächst ein aus zwei Graphitfolien und einem Spießblech bestehender Kern gemäß dem unter Beispiel 1 beschriebenen Verfahren hergestellt. Der so erhaltene Körper wurde sodann in einem Umluftofen bei 105 °C gründlich getrocknet. Der spießblechverstärkte Graphitfolienkörper wurde sodann in eine Polytetrafluorethylenfolie eingeschlagen, wie sie in den vorstehenden Beispielen ebenfalls verwendet worden war und das aus der Polymerfolie und dem spießblechverstärkten Kernkörper bestehende Paket in das zuvor auf 375 °C aufgeheizte Gesenk einer Heißpresse überführt und dort ungefähr 5 Minuten lang unter einem Preßdruck von 2 MPa verpreßt. Unter diesen Bedingungen verschweißten die Graphitfolien mit den Polymerfolien. Aus dem so erhaltenen Schichtstoff wurden sodann durch Ausstanzen Dichtungskörper, Innendurchmesser 49 mm, Außendurchmesser 92 mm hergestellt und es wurden aus diesen durch Anbringen von Innenbördeln entsprechend der Verfahrensweise nach Ausführungsbeispiel 1 erfindungsgemäße Flachdichtungen gefertigt.

Beispiel 4 (Vergleich): Als Schichtstoff für das Herstellen des Dichtungskörpers dieser Flachdichtung wurde der Kern des Dichtungskörpers der Flachdichtung gemäß Ausführungsbeispiel 1 verwendet. Zum Herstellen dieses Kerns wurden zwei Bahnen 1,05 mm dicker Graphitfolien mit einer Rohdichte von 0,9 g/cm³ nach einem allgemein bekannten Verfahren in einem Walzenstuhl, dessen zwei Walzen auf eine Spaltbreite von 1,9 mm eingestellt worden war mit einem beidseitig mit Spießen versehenen Spießblech aus Edelstahl, Material-Nr. 1.4401, das eine Blechstärke von 0,1 mm hatte, so miteinander verwalzt, daß ein spießblechverstärkter Graphitfolienkörper entstand, der auf beiden Seiten je eine Graphitfolie mit einer Rohdichte von 1,0 g/cm³ aufwies. Aus diesem Schichtstoff wurden ringförmige Dichtungskörper, Innendurchmesser 49 mm, Außendurchmesser 92 mm hergestellt, die entlang ihrer Innenumfänge nach einem der üblichen Verfahren mit einem Edelstahlbördel versehen wurden.

Mit Prüfkörpern aus Schichtstoffen, die beim Herstellen der Flachdichtungen gemäß den Ausführungsbeispielen 1, 2 und 3 als Zwischenprodukte erhalten worden waren, wurden folgende Messungen durchgeführt:
- Ermittlung der Druckfestigkeit in Abhängigkeit von der Temperatur gemäß DIN 28090-1;
- Ermittlung des Kompressibilitäts- und des Rückfederungsverhaltens bei Raumtemperatur, bei 150°C und bei 300°C gemäß DIN 28090-2;

In Tabelle 1 sind die Meßwerte der Druckfestigkeitsprüfung wiedergegeben:

**Tabelle 1**

| kritische Flächenpressung (MPa) im Zeitpunkt des Versagens des Schichtstoffs | | | |
|---|---|---|---|
| | Temperatur | | |
| Schichtstoff gemäß | 20°C | 150°C | 300°C |
| Beispiel 1 | 148 | 130 | 118 |
| Beispiel 2 | 138 | 120 | 112 |
| Beispiel 3 | 119 | 88 | 71 |

Es ist zu erkennen, daß die Schichtstoffe bei allen Temperaturen eine große Druckfestigkeit aufweisen. Allerdings hat der Schichtstoff, dem in den zwei äußeren Lagen die Metallfolien fehlen, geringere Druckfestigkeiten, die nach höheren Temperaturen zu auch stärker abnehmen.

Tabelle 2 gibt die das Kompressions- und das Rückfederungsverhalten kennzeichnenden Meßwerte bei Raumtemperatur und bei 150°C an. Die Messungen wurden an den Schichtstoffen durchgeführt, aus denen die Dichtungskörper bestehen:

**Tabelle 2**

| Kaltstauch- (KSW) und Kaltrückfederungswerte (KRW) bei 20°C sowie Warmstauch- (WSW) und Warmrückfederungswerte (WRW) bei 150°C; Messung gemäß DIN 28090-2 | | | | |
|---|---|---|---|---|
| | 20°C | | 150°C | |
| Schichtstoff gemäß | KSW(%) | KRW(%) | WSW(%) | WRW(%) |
| Beispiel 1 | 18,8 | 4,5 | 1,5 | 4,1 |
| Beispiel 2 | 20,1 | 4,7 | 0,8 | 4,4 |
| Beispiel 3 | 34,5 | 3,9 | 1,3 | 3,6 |
| KSW und WSW, gemessen bei einer Flächenpressung von 20 MPa gemäß DIN 28091-3 | | | | |

Aus Tabelle 3 sind die Meßwerte für das Kompressions- und das Rückfederungsverhalten bei Raumtemperatur und bei 300°C zu entnehmen:

**Tabelle 3**

| Kaltstauch- (KSW) und Kaltrückfederungswerte (KRW) bei 20°C sowie Warmstauch- (WSW) und Warmrückfederungswerte (WRW) bei 300°C; Messung gemäß DIN 28090-2 | | | | |
|---|---|---|---|---|
| | 20°C | | 300°C | |
| Schichtstoff gemäß | KSW(%) | KRW(%) | WSW(%) | WRW(%) |
| Beispiel 1 | 26,1 | 4,0 | 2,8 | 4,2 |
| Beispiel 2 | 23,8 | 4,3 | 3,7 | 4,5 |
| Beispiel 3 | 39,1 | 3,5 | 2,2 | 3,8 |
| KSW, gemessen bei einer Flächenpressung von 35 MPa gemäß DIN 28091-4 | | | | |
| WSW, gemessen bei einer Flächenpressung von 50 MPa gemäß DIN 28091-4 | | | | |

Erläuterungen zu den Tabellen 2 und 3:
"KSW", Kaltstauchwert und "WSW", Warmstauchwert, sind Werte, die die Kompressibilität der Schichtstoffe bei Raumtemperatur (KSW) und bei erhöhter Temperatur (WSW) kennzeichnen.
"KRW", Kaltrückfederungswert und "WRW", Warmrückfederungswert, sind Größen, die das Rückfederungsvermögen der Schichtstoffe nach vorheriger Kompression bei Raumtemperatur und bei erhöhter Temperatur kennzeichnen.

Aus den Tabellen 2 und 3 geht hervor, daß sich die Schichtstoffe gemäß den Beispielen 1 und 2, deren äußere Lagen aus Metallfolien mit auflaminierten Polymerfolien bestehen, nicht so stark zusammendrücken lassen, wie der Schichtstoff nach Beispiel 3, bei dem die Metallfolien in den äußeren zwei Lagen fehlen. Das Rückfederungsvermögen der erfindungsgemäßen Schichtstoffe ist in allen Temperaturbereichen gut. Für die Anwendung der Schichtstoffe als Dichtungskörper von Dichtungen bedeutet das, daß beim Anspannen der Flansche entsprechend kleine Wege zurückgelegt werden müssen, daß aber von den Dichtungen gute Dichtwirkungen erwartet werden können. Dies gilt für einen Temperaturbereich von tiefsten Temperaturen bis zur jeweiligen Daueranwendungstemperatur, die je nach Aufbau des Dichtungskörpers zwischen 150 und 300°C und in Sonderfällen bis 400°C liegt.

In Diagramm 1 ist die Dichtwirkung, gekennzeichnet durch die spezifische Leckagerate für eine Flachdichtung 1 mit einem Innenbördel aus Edelstahl, Material-Nr. 1.4571, gemäß Ausführungsbeispiel 1 oder einer Dichtung entsprechend Figur 12, jedoch ohne Außenbördel, exemplarisch im Vergleich zu einer Flachdichtung 2 mit einem Innenbördel nach dem Stand der Technik, deren Dichtungskörper aus einem Schichtstoff hergestellt worden war, der entsprechend Ausführungsbeispiel 4 lediglich aus zwei Graphitfolien bestand, zwischen denen ein Spießblech angeordnet war, dargestellt. Gegenüber der erfindungsgemäßen Flachdichtung fehlte bei der zum Vergleich verwendeten Dichtung die beidseitige Auflage aus der mit der Polymerfolie verbundenen Metallfolie. Die Prüfung wurde gemäß DIN 28090 durchgeführt. Dabei betrug der Innendruck des Gases 40 bar. Als Testgas wurde Stickstoff verwendet. Aus dem Diagramm ist die große Überlegenheit der erfindungsgemäßen Flachdichtung ohne weitere Erläuterung klar zu erkennen. Schon bei vergleichsweise geringen Flächenpressungen sind damit so kleine Leckageraten zu erreichen wie sie mit den Vergleichsschichtstoffen niemals erreicht werden können. Mit den erfindungsgemäßen Flachdichtungen können auch Leckagewerte von kleiner als 0,001 mg/(s m) erreicht werden. Sie entsprechen damit höchsten Anforderungen.

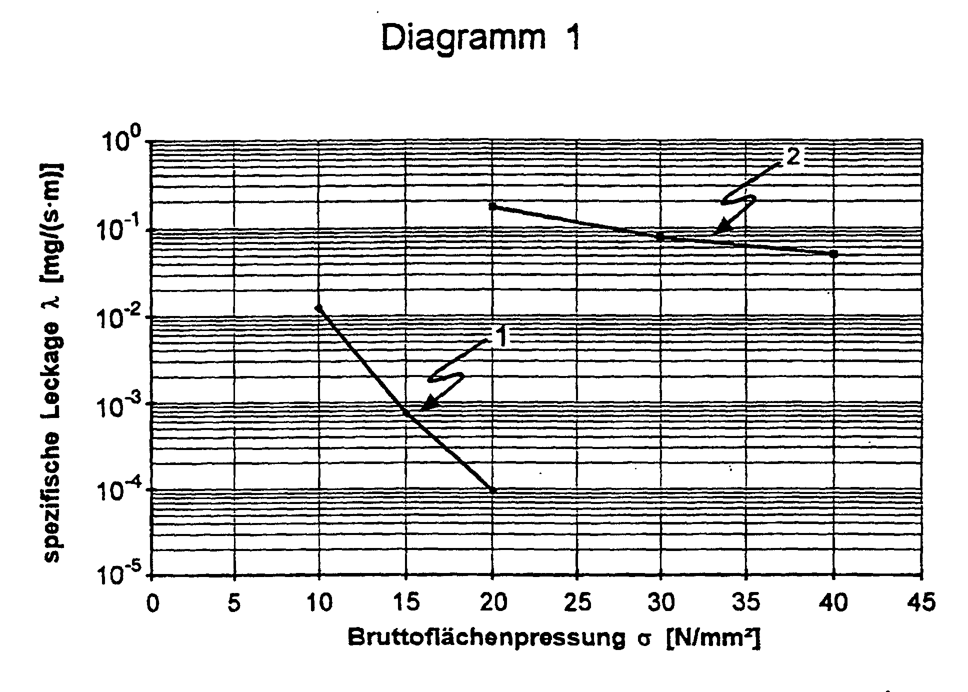

### Bezugszeichenliste

- 1: Flanschverbindung
- 2: Flachdichtung (herkömmlich)
- 3: Innenbördel
- 3': Außenbördel
- 4;4': Flansch
- 5: Mutter
- 6,: Bolzenschraube
- 7;7': Bohrung
- 8;8': Flachseite der Dichtung
- 9;9': Dichtfläche
- 10;10': Polymerfolie/Belag
- 11;11';11'';11''';11'''': Metallfolie
- 12;12';12'';12''': Graphitlaminat/-Folie
- 14: Gasdichte Verbindung
- 15;15': Unebenheit
- 16: Medium
- 17;17': Kleber
- 18: Kern
- 19;19': Haft- oder Klebefolie
- 20: Flachdichtung (gemäß Erfindung)
- 21: Spießblech
- 22,22': Spieß
- 30;40;50;60;70;80;90; 100;110;120;: Flachdichtung

## Patentansprüche

1. Flachdichtung (2;20) aus einem Dichtungskörper mit einem druckfesten Kern (18), der gegenüber Temperaturen von mindestens 150 °C dauerbeständig ist, mit einem Belag (10;10') auf den beiden flachen Oberflächen des Kerns, sowie mit einem Innen- (3) oder einem Außen- (3') oder einem Innen- und einem Außenbördel (3;3'),
**dadurch gekennzeichnet, daß**
der Belag (10;10') die flachen Oberflächen des Kerns (18) vollständig bedeckt, aus einer gasdichten Folie (10;10') aus einem organischen Polymer mit einer Dauertemperaturbeständigkeit von mindestens 150 °C besteht und daß der Dichtungskörper so von dem mindestens einen Bördel (3;3') umfaßt ist, daß die Verbindung zwischen der gasdichten Folie (10;10') und dem mindestens einen Bördel (3;3') gasdicht ist.

2. Flachdichtung nach Patentanspruch 1,
**dadurch gekennzeichnet, daß**
der Kern (18) aus einem mit organischen oder anorganischen Fasern verstärkten thermoplastischen Kunststoff oder Elastomer besteht.

3. Flachdichtung nach Patentanspruch 2,
**dadurch gekennzeichnet, daß**
die verstärkenden Fasern des Kerns (18), Fasern aus der Gruppe Aramidfasern, Glasfasern, Keramikfasern, Kohlenstoffasern, Graphitfasern, Metallfasern und der thermoplastische Kunststoff oder das Elastomer ein Stoff aus der Gruppe Nitril-Butadien-Kautschuk, Styrol-Butadien-Kautschuk, Natur-kautschuk, Ethylen-Propylen-Terpolymer, Ethylen-Vinylacetat-Copolymer, Fluorkautschuk, Fluorsilicon-kautschuk, Vinyl-haltiges Dimethylpolysiloxan, Acrylatkautschuk, Ethylen-Acrylatkautschuk ist.

4. Flachdichtung nach Patentanspruch 2 oder 3,
**dadurch gekennzeichnet, daß**
der Kern (18) zusätzlich zu den verstärkenden Fasern Füllstoffe mit einer Dauertemperaturbeständigkeit von mindestens 150°C enthält.

5. Flachdichtung nach Patentanspruch 1,
**dadurch gekennzeichnet, daß**
der Kern (18) aus einem Material aus der Gruppe, Kohlenstoff, Graphit, Glimmer besteht.

6. Flachdichtung nach Patentanspruch 5,
**dadurch gekennzeichnet, daß**
der Kern (18) aus mindestens einer Lage Graphitfolien (12;12';12'';12''') besteht, die aus expandiertem Graphit hergestellt worden ist.

7. Flachdichtung nach einem oder mehreren der Patentansprüche 1 bis 6,
**dadurch gekennzeichnet, daß**
der Kern (18) auf seinen beiden äußeren Flachseiten
je eine Metallfolie (11;11';11'';11''';1'''') aufweist, die diese Flachseiten vollständig bedecken und die den Kern (18) nach außen begrenzen.

8. Flachdichtung nach Patentanspruch 1,
**dadurch gekennzeichnet, daß**
der Kern (18) aus übereinander im Wechsel und parallel angeordneten Lagen von 1. einem anorganischen, hochtemperaturbeständigen, druckfesten Stoff und 2. Metallfolien (11;11';11'';11''';11'''') besteht.

9. Flachdichtung nach Patentanspruch 8,
**dadurch gekennzeichnet, daß**
in dem Kern (18) die Lagen aus dem anorganischen, hochtemperaturbeständigen und druckfesten Stoff mit den Metallfolien (11;11';11'';11''';11'''') verbunden sind.

10. Flachdichtung nach Patentanspruch 9,
**dadurch gekennzeichnet, daß**
in dem Kern (18) die Lagen aus dem anorganischen, hochtemperaturbeständigen und druckfesten Stoff mit den Metallfolien (11;11';11'';11''';11'''') durch einen Kleber verbunden sind.

11. Flachdichtung nach einem oder mehreren der Patentansprüche 8 bis 10,
**dadurch gekennzeichnet, daß**
die beiden äußeren Lagen des Kerns (18) Metallfolien (11;11';11'';11''';11'''') sind, die die Flachseiten des Kerns (18) vollständig bedecken.

12. Flachdichtung nach einem der Patentansprüche 8 bis 11,
**dadurch gekennzeichnet, daß**
der anorganische, hochtemperaturbeständige und druckfeste Stoff Glimmer ist.

13. Flachdichtung nach einem der Patentansprüche 8 bis 11,
**dadurch gekennzeichnet, daß**
der anorganische, hochtemperaturbeständige und druckfeste Stoff mindestens eine Graphitfolie (12;12'; 12'';12''') ist.

14. Flachdichtung nach einem oder mehreren der Patentansprüche 1 bis 13,
**dadurch gekennzeichnet, daß**
der Kern (18) mit dem Belag (10;10') durch einen Kleber verbunden ist.

15. Flachdichtung nach einem oder mehreren der Patentansprüche 1 bis 13,
**dadurch gekennzeichnet, daß**
der Kern (18) mit dem Belag (10;10') kleberfrei verbunden ist.

16. Flachdichtung nach Patentanspruch 15,
**dadurch gekennzeichnet, daß**
der Kern (18) mit dem Belag (10;10') verschweißt ist.

17. Flachdichtung gemäß einem oder mehreren der Patentansprüche 12 bis 16,
**dadurch gekennzeichnet, daß**
mindestens eine der im Inneren des Kerns (18) vorhandenen Metallfolien (11;11';11'';11''';11'''') ein Spießblech (21) ist und daß dieses Spießblech (21)auf seinen beiden Flachseiten mit je einer Graphitfolie (12;12';12'';12''') verbunden ist.

18. Flachdichtung gemäß einem der Patentansprüche 13 oder 17,
**dadurch gekennzeichnet, daß**
der anorganische, hochtemperaturbeständige und druckfeste Stoff mindestens eine Graphitfolie (12;12';12''; 12''') ist und daß die Verbindungen der Graphitfolien (12;12';12'';12''') mit den Metallfolien (11;11';11''; 11''';11'''') und die Verbindungen der Metallfolien (11;11';11'';11''';11'''') mit dem Belag (10;10') frei von Klebstoffen sind.

19. Flachdichtung gemäß Patentanspruch 17 oder 18,
**dadurch gekennzeichnet, daß**
der von dem mindestens einen Bördel (3;3') umgriffene Dichtungskörper aus einer mittig angeordneten Metallfolie (11;11';11'';11''';11''''), zwei mit den Flachseiten dieser Metallfolie (11;11';11'';11''';11'''') verbundenen Lagen Graphitfolie (12;12';12'';12''') und zwei mit den nach außen zeigenden Flachseiten der beiden Graphitfolien (12;12';12'';12''') verbundenen Metallfolien (11;11';11'';11''';11''''), die auf ihren nach außen zeigenden Flachseiten vollständig mit einem Belag (10;10') aus einer Polymerfolie bedeckt und klebstofffrei verbunden sind, besteht.

20. Flachdichtung nach Patentanspruch 18,
**dadurch gekennzeichnet, daß**
der von dem mindestens einen Bördel (3;3') umgriffene Dichtungskörper aus einer mittig angeordneten Graphitfolie (12;12';12'';12'''), die auf ihren beiden Flachseiten mit je einer Metallfolie (11;11';11''; 11''';11'''') verbunden ist, deren nach außen weisende Oberflächen mit einem Belag (10;10') aus einer Polymerfolie vollständig bedeckt und klebstofffrei verbunden sind, besteht.

21. Flachdichtung nach einem oder mehreren der Patentansprüche 18 bis 20,
**dadurch gekennzeichnet, daß**
der Belag (10;10') mit den Metallfolien (11;11';11''; 11''';11'''') thermisch verschweißt ist.

22. Flachdichtung nach einem oder mehreren der Patentansprüche 18 bis 21,
**dadurch gekennzeichnet, daß**
die Graphitfolien (12;12';12'';12''') mit den Metallfolien (11;11';11'';11''';11'''') unter Anwendung von Druck und erhöhter Temperatur durch Aufwalzen verbunden worden sind.

23. Flachdichtung nach einem oder mehreren der Patentansprüche 13 und 18 bis 21,
**dadurch gekennzeichnet, daß**
die mit den Graphitfolien (12;12';12'';12''') zu verbindenden Oberflächen der Metallfolien (11;11';11''; 11''';11'''') eine dünne Beschichtung aus einer Mischung aus einer Siloxanemulsion und einem Fettalkohol aufweisen und durch Druck und Temperatureinwirkung mit den Graphitfolien (12;12';12'';12''') verbunden sind.

24. Flachdichtung nach einem oder mehreren der Patentansprüche 7 bis 23,
**dadurch gekennzeichnet, daß**
die Metallfolien (11;11';11'';11''';11'''') aus einem korrosionsfesten Metall, einer korrosionsfesten Metallegierung, aus Aluminium oder aus einer Aluminiumlegierung oder aus Kupfer oder aus einer Kupferlegierung bestehen.

25. Flachdichtung nach einem oder mehreren der Patentansprüche 7 bis 24,
**dadurch gekennzeichnet, daß**
die Metallfolien (11;11';11'';11''';11'''') eine Dicke im Bereich von 0,005 mm bis 1 mm haben.

26. Flachdichtung nach einem oder mehreren der Patentansprüche 6 bis 25,
**dadurch gekennzeichnet, daß**
die Graphitfolien (12;12';12'';12''') eine Rohdichte im Bereich von 0,1 g/cm³ bis 1,8 g/cm³ und einen Kohlenstoffgehalt von 90 bis 99,95 Gewichtsprozent aufweisen.

27. Flachdichtung nach einem oder mehreren der Patentansprüche 6 bis 26,
**dadurch gekennzeichnet, daß**
die Graphitfolien (12;12';12'';12''') eine Dicke von 0,1 mm bis 4,0 mm haben.

28. Flachdichtung nach einem oder mehreren der Patentansprüche 1 bis 27,
**dadurch gekennzeichnet, daß**
der Belag (10;10') eine Polymerfolie (10;10') ist und aus einem Material aus der Gruppe Polyaryletheretherketon, Polyaryletherketon, Polyphenylensulfid, Polyarylsulfon, Polyethersulfon, Polyimid, Polyamidimid, fluorhaltige Polymere besteht.

29. Flachdichtung nach Patentanspruch 28,
**dadurch gekennzeichnet, daß**
die Polymerfolie (10;10') aus einem Material aus der Gruppe Polytetrafluorethylen, Polytrifluorchlorethylen, Tetrafluorethylen-Hexafluorpropylen-Copolymerisat, Copolymerisate von Tetrafluorethylen mit Perfluoralkylvinylether, Copolymerisate von Ethylen und Tetrafluorethylen, Polyvinylidenfluorid besteht.

30. Flachdichtung nach Patentanspruch 29,
**dadurch gekennzeichnet, daß**
die Polymerfolie (10;10') aus einem perfluorierten organischen Polymeren besteht.

31. Flachdichtung gemäß einem oder mehreren der Patentansprüche 1 bis 30,
**dadurch gekennzeichnet, daß**
die den Belag (10;10') bildenden Polymerfolien (10;10') eine Dicke im Bereich von 0,005 mm bis 1,0 mm aufweisen.

32. Flachdichtung nach einem oder mehreren der Patentansprüche 1 bis 31,
**dadurch gekennzeichnet, daß**
der oder die Bördel (3;3') aus Metall bestehen.

33. Flachdichtung nach Patentanspruch 32,
**dadurch gekennzeichnet, daß**
der oder die Bördel (3;3') aus einem korrosionsfesten Metall besteht/bestehen.

34. Flachdichtung nach einem oder mehreren der Patentansprüche 1 bis 31,
**dadurch gekennzeichnet, daß**
der oder die Bördel (3;3') aus einem perfluorierten organischen Polymeren besteht/bestehen.

35. Flachdichtung nach einem oder mehreren der Patentansprüche 1 bis 34,
**dadurch gekennzeichnet, daß**
sie eine Permeabilität von kleiner/gleich 0,1 ml/min aufweist.

## Claims

1. A flat gasket (2;20) consisting of a gasket body with a pressure-resistant core (18) which is permanently stable at temperatures of at least 150 °C, with a covering (10;10') on the two flat surfaces of the core, and also with an inner bead (3) or with an outer bead (3') or with an inner bead and an outer bead (3;3'),
**characterised in that**
the covering (10;10') completely covers the flat surfaces of the core (18), consists of a gas-tight film (10;10') made of an organic polymer having long-term stability at a temperature of at least 150 °C, and **in that** the gasket body is enclosed by the at least one bead (3;3') in such a way that the join between the gas-tight film (10;10') and the at least one bead (3'3') is gas-tight.

2. Flat gasket according to Claim 1,
**characterised in that**
the core (18) consists of a thermoplastic synthetic material or elastomer which is reinforced with organic or inorganic fibres.

3. Flat gasket according to Claim 2,
**characterised in that**
the reinforcing fibres of the core (18) are fibres selected from the group comprising aramid fibres, glass fibres, ceramic fibres, carbon fibres, graphite fibres, metal fibres, and the thermoplastic synthetic material or the elastomer is a substance selected from the group comprising nitrile/butadiene rubber, styrene/butadiene rubber, natural rubber, ethylene/propylene terpolymer, ethylene/vinyl-acetate copolymer, fluorinated rubber, fluorosilicone rubber, vinyl-containing dimethylpolysiloxane, acrylate rubber, ethylene/acrylate rubber.

4. Flat gasket according to Claim 2 or 3,
**characterised in that**
the core (18) contains, in addition to the reinforcing fibres, fillers having long-term stability at a temperature of at least 150 °C.

5. Flat gasket according to Claim 1,
**characterised in that**
the core (18) consists of a material selected from the group comprising carbon, graphite, mica.

6. Flat gasket according to Claim 5,
**characterised in that**
the core (18) consists of at least one layer of graphite foils (12;12';12'';12''') which has been produced from expanded graphite.

7. Flat gasket according to one or more of Claims 1 to 6,
**characterised in that**
the core (18) exhibits a metal foil (11;11';11'';11''';11'''') on each of its two outer flat sides, said metal foils completely covering said flat sides and bounding the core (18) in the outward direction.

8. Flat gasket according to Claim 1,
**characterised in that**
the core (18) consists of layers, arranged above one another in alternation and in parallel, of 1) an inorganic, high-temperature-stable, pressure-resistant substance and 2) metal foils (11;11';11'';11''';11'''').

9. Flat gasket according to Claim 8,
**characterised in that**
the layers consisting of the inorganic, high-temperature-stable and pressure-resistant substance are joined in the core (18) to the metal foils (11;11';11'';11''';11'''').

10. Flat gasket according to Claim 9,
**characterised in that**
the layers consisting of the inorganic, high-temperature-stable and pressure-resistant substance are joined in the core (18) to the metal foils (11;11';11'';11''';11'''') by means of an adhesive.

11. Flat gasket according to one or more of Claims 8 to 10,
**characterised in that**
the two outer layers of the core (18) are metal foils (11;11';11'';11''';11'''') which completely cover the flat sides of the core (18).

12. Flat gasket according to one of Claims 8 to 11,
**characterised in that**
the inorganic, high-temperature-stable and pressure-resistant substance is mica.

13. Flat gasket according to one of Claims 8 to 11,
**characterised in that**
the inorganic, high-temperature-stable and pressure-resistant substance is at least one graphite foil (12;12';12'';12''').

14. Flat gasket according to one or more of Claims 1 to 13,
**characterised in that**
the core (18) is joined to the covering (10;10') by means of an adhesive.

15. Flat gasket according to one or more of Claims 1 to 13,
**characterised in that**
the core (18) is joined to the covering (10;10') in an adhesive-free manner.

16. Flat gasket according to Claim 15,
**characterised in that**
the core (18) is welded to the covering (10;10').

17. Flat gasket according to one or more of Claims 12 to 16,
**characterised in that**
at least one of the metal foils (11;11';11'';11'''; 11'''') which are present in the interior of the core (18) is a tined metal sheet (21), and **in that** said tined metal sheet (21) is joined on each of its two flat sides to a graphite foil (12;12';12''; 12''').

18. Flat gasket according to one of Claims 13 or 17,
**characterised in that**
the inorganic, high-temperature-stable and pressure-resistant substance is at least one graphite foil (12;12';12'';12'''), and **in that** the joins of the graphite foils (12;12';12'';12''') to the metal foils (11;11';11'';11''';11'''') and the joins of the metal foils (11;11';11'';11''';11'''') to the covering (10;10') are free of adhesives.

19. Flat gasket according to Claim 17 or 18,
**characterised in that**
the gasket body which is encompassed by at least one bead (3;3') consists of a centrally arranged metal foil (11;11';11'';11''';11''''), two layers of graphite foil (12;12';12'';12''') joined to the flat sides of said metal foil (11;11';11'';11'''; 11''''), and two metal foils (11;11';11'';11'''; 11'''') joined to the outward-pointing flat sides of the two graphite foils (12;12';12'';12'''), said metal foils being completely covered on their outward-pointing flat sides with a covering (10;10') consisting of a polymer film and being joined in adhesive-free manner.

20. Flat gasket according to Claim 18,
**characterised in that**
the gasket body which is encompassed by at least one bead (3;3') consists of a centrally arranged graphite foil (12;12';12'';12''') which is joined on each of its two flat sides to a metal foil (11;11';11'';11''';11''''), the outward-pointing surfaces of which are completely covered with a covering (10;10') consisting of a polymer film and are joined in adhesive-free manner.

21. Flat gasket according to one or more of Claims 18 to 20,
**characterised in that**
the covering (10;10') is welded to the metal foils (11;11';11'';11''';11'''').

22. Flat gasket according to one or more of Claims 18 to 21,
**characterised in that**
the graphite foils (12;12';12'';12''') have been joined to the metal foils (11;11';11'';11'''; 11'''') by application of a roller while applying pressure and elevated temperature.

23. Flat gasket according to one or more of Claims 13 and 18 to 21,
**characterised in that**
the surfaces of the metal foils (11;11';11''; 11''';11'''') to be joined to the graphite foils (12;12';12'';12''') exhibit a thin coating consisting of a mixture of a siloxane-emulsion and a fatty alcohol and are joined to the graphite foils (12;12';12'';12''') by pressure and influence of temperature.

24. Flat gasket according to one or more of Claims 7 to 23,
**characterised in that**
the metal foils (11;11';11'';11''';11'''') consist of a non-corroding metal, a non-corroding metal alloy, aluminium, an aluminium alloy, copper or a copper alloy.

25. Flat gasket according to one or more of Claims 7 to 24,
**characterised in that**
the metal foils (11;11';11'';11''';11'''') have a thickness within the range from 0.005 mm to 1 mm.

26. Flat gasket according to one or more of Claims 6 to 25,
**characterised in that**
the graphite foils (12;12';12'';12''') exhibit a bulk density within the range from 0.1 g/cm³ to 1.8 g/cm³ and a carbon content from 90 percent by weight to 99.95 percent by weight.

27. Flat gasket according to one or more of Claims 6 to 26,
**characterised in that**
the graphite foils (12;12';12";12"') have a thickness from 0.1 mm to 4.0 mm.

28. Flat gasket according to one or more of Claims 1 to 27,
**characterised in that**
the covering (10;10') is a polymer film (10;10') and consists of a material selected from the group comprising polyaryl ether ether ketone, polyaryl ether ketone, polyphenylene sulfide, polyaryl sulfone, polyether sulfone, polyimide, polyamide imide, fluorine-containing polymers.

29. Flat gasket according to Claim 28,
**characterised in that**
the polymer film (10;10') consists of a material selected from the group comprising polytetrafluoroethylene, polytrifluorochloroethylene, tetrafluoroethylene/hexafluoropropylene copolymer, copolymers of tetrafluoroethylene with perfluoroalkyl vinyl ether, copolymers of ethylene and tetrafluoroethylene, polyvinylidene fluoride.

30. Flat gasket according to Claim 29,
**characterised in that**
the polymer film (10;10') consists of a perfluorinated organic polymer.

31. Flat gasket according to one or more of Claims 1 to 30,
**characterised in that**
the polymer films (10;10') forming the covering (10;10') exhibit a thickness within the range from 0.005 mm to 1.0 mm.

32. Flat gasket according to one or more of Claims 1 to 31,
**characterised in that**
the bead or beads (3;3') consist(s) of metal.

33. Flat gasket according to Claim 32,
**characterised in that**
the bead or beads (3;3') consist(s) of a non-corroding metal.

34. Flat gasket according to one or more of Claims 1 to 31,
**characterised in that**
the bead or beads (3;3') consist(s) of a perfluorinated organic polymer.

35. Flat gasket according to one or more of Claims 1 to 34,
**characterised in that**
it exhibits a permeability less than or equal to 0.1 ml/min.

## Revendications

1. Joint plat (2 ; 20) composé d'un corps de joint comportant un noyau résistant à la pression (18), capable de résister à long terme à des températures d'au moins 150 °C, comportant un revêtement (10 ; 10') sur les deux surfaces plates du noyau, et comportant également une bordure intérieure (3) ou une bordure extérieure (3') ou une bordure intérieure et une bordure extérieure (3 ; 3'),
**caractérisé en ce que**
le revêtement (10 ; 10') qui recouvre complètement les surfaces plates du noyau (18), se compose d'un film (10 ; 10') étanche aux gaz de polymère organique, capable de résister à long terme à des températures d'au moins 150 °C, et le corps de joint est entouré par au moins une bordure (3 ; 3'), de telle sorte que la fixation entre le film étanche aux gaz (10 ; 10') et ladite au moins une bordure (3 ; 3') soit étanche aux gaz.

2. Joint plat selon la revendication 1,
**caractérisé en ce que**
le noyau (18) se compose d'un élastomère ou d'un plastique thermoplastique renforcé par des fibres organiques ou inorganiques.

3. Joint plat selon la revendication 2,
**caractérisé en ce que**
les fibres de renforcement du noyau (18) sont des fibres appartenant à la famille des fibres aramides, des fibres de verre, des fibres de céramique, des fibres de carbone, des fibres de graphite, des fibres métalliques et le plastique thermoplastique ou l'élastomère est un matériau appartenant à la famille du caoutchouc nitrile-butadiène, du caoutchouc styrène-butadiène, du caoutchouc naturel, du terpolymère d'éthylène-propylène, du copolymère d'éthylène-vinylacétate, du caoutchouc fluoré, du caoutchouc de fluorosilicone, du diméthylpolysiloxane contenant du vinyle, du caoutchouc acrylate ou du caoutchouc éthylène-acrylate.

4. Joint plat selon la revendication 2 ou 3,
**caractérisé en ce que**
le noyau (18) contient outre les fibres de renforcement une matière de remplissage capable de résister à long terme à des températures d'au moins 150 °C.

5. Joint plat selon la revendication 1,
**caractérisé en ce que**
le noyau (18) se compose d'un matériau appartenant à la famille du carbone, du graphite ou du mica.

6. Joint plat selon la revendication 5,
**caractérisé en ce que**
le noyau (18) se compose d'au moins une couche de films de graphite (12, 12', 12", 12"'), qui sont fabriqués à partir de graphite expansé.

7. Joint plat selon une ou plusieurs des revendications 1 à 6,
**caractérisé en ce que**
le noyau (18) présente sur ses deux côtés plats extérieurs respectivement un film métallique (11 ; 11' ; 11'' ; 11''' ; 11 ""), ces films métalliques recouvrant complètement ces côtés plats et limitant le noyau (18) vers l'extérieur.

8. Joint plat selon la revendication 1,
**caractérisé en ce que**
le noyau (18) se compose de couches parallèles et disposées en alternance les unes sur les autres, constituées de 1. un matériau inorganique résistant à la pression et aux hautes températures et 2. des films métalliques (11 ; 11' ; 11'' ; 11''' ; 11'''').

9. Joint plat selon la revendication 8,
**caractérisé en ce que**
dans le noyau (18), les couches constituées du matériau inorganique résistant à la pression et aux hautes températures sont fixées aux films métalliques (11 ; 11' ; 11'' ; 11''' ; 11'''').

10. Joint plat selon la revendication 9,
**caractérisé en ce que**
dans le noyau (18), les couches constituées du matériau inorganique résistant à la pression et aux hautes températures sont fixées aux films métalliques (11 ; 11' ; 11'' ; 11''' ; 11'''') par le biais d'un agent adhésif.

11. Joint plat selon une ou plusieurs des revendications 8 à 10,
**caractérisé en ce que**
les deux couches extérieures du noyau (18) sont des films métalliques (11 ; 11' ; 11'' ; 11'''; 11'''') qui recouvrent complètement les côtés plats du noyau (18).

12. Joint plat selon une ou plusieurs des revendications 8 à 11,
**caractérisé en ce que**
le matériau inorganique résistant à la pression et aux hautes températures est un mica.

13. Joint plat selon une ou plusieurs des revendications 8 à 11,
**caractérisé en ce que**
le matériau inorganique résistant à la pression et aux hautes températures est au moins un film de graphite (12 ; 12' ; 12" ; 12"').

14. Joint plat selon une ou plusieurs des revendications 1 à 13,
**caractérisé en ce que**
le noyau (18) est fixé au revêtement (10 ; 10') par un agent adhésif.

15. Joint plat selon une ou plusieurs des revendications 1 à 13,
**caractérisé en ce que**
le noyau (18) est fixé au revêtement (10 ; 10') sans agent adhésif.

16. Joint plat selon la revendication 15,
**caractérisé en ce que**
le noyau (18) est soudé au revêtement (10 ; 10').

17. Joint plat selon une ou plusieurs des revendications 12 à 16,
**caractérisé en ce qu'**
au moins l'un des films métalliques (11 ; 11' ; 11'' ; 11''' ; 11'''') présents à l'intérieur du noyau (18) est une tôle recourbée (21) et cette tôle recourbée (21) est fixée à chaque fois au niveau de ses deux côtés plats à un film de graphite (12 ; 12' ; 12" ; 12''').

18. Joint plat selon l'une des revendications 13 ou 17,
**caractérisé en ce que**
le matériau inorganique résistant à la pression et aux hautes températures est au moins un film de graphite (12, 12', 12", 12"') et les fixations entre les films de graphite (12, 12', 12", 12''') et les films métalliques (11 ; 11' ; 11'' ; 11''' ; 11'''') de même que les fixations entre les films métalliques (11 ; 11' ; 11''; 11'''; 11'''') et le revêtement (10 ; 10') sont réalisées sans agent adhésif.

19. Joint plat selon la revendication 17 ou 18,
**caractérisé en ce que**
le corps de joint entouré par au moins une bordure (3 ; 3') se compose d'un film métallique (11 ; 11' ; 11'' ; 11''' ; 11"") disposé au milieu, de deux couches de film de graphite (12 ; 12' ; 12" ; 12"') fixées aux côtés plats de ce film métallique (11 ; 11' ; 11'' ; 11''' ; 11'''') et de deux films métalliques (11 ; 11' ; 11'' ; 11''' ; 11'''') fixés aux côtés plats tournés vers l'extérieur des deux films de graphite (12 ; 12' ; 12" ; 12"'), ces deux films métalliques étant complètement recouverts sur leurs côtés plats tournés vers l'extérieur par un revêtement (10 ; 10') constitué d'un film polymère et sont fixés sans agent adhésif.

20. Joint plat selon la revendication 18,
**caractérisé en ce que**
le corps de joint entouré par au moins une bordure (3 ; 3') se compose d'un film de graphite (12 ; 12' ; 12" ; 12"') disposé au milieu, qui est fixé chaque fois sur ses deux côtés plats à un film métallique (11 ; 11' ; 11'' ; 11''' ; 11''''), dont les surfaces tournées vers l'extérieur sont complètement recouvertes par un revêtement (10 ; 10') constitué d'un film polymère et sont fixées sans agent adhésif.

21. Joint plat selon une ou plusieurs des revendications 18 à 20,
**caractérisé en ce que**
le revêtement (10 ; 10') est thermosoudé aux films métalliques (11 ; 11' ; 11'' ; 11''' ; 11"").

22. Joint plat selon une ou plusieurs des revendications 18 à 21,
**caractérisé en ce que**
les films de graphite (12 ; 12' ; 12" ; 12"') ont été fixés aux films métalliques (11 ; 11' ; 11'' ; 11''' ; 11"") par laminage sous pression et à température élevée.

23. Joint plat selon une ou plusieurs des revendications 13 et 18 à 21,
**caractérisé en ce que**
les surfaces des films métalliques (11 ; 11' ; 11'' ; 11''' ; 11'''') à fixer aux films de graphite (12 ; 12' ; 12" ; 12''') présentent un fin revêtement constitué d'un mélange d'une émulsion de siloxane et d'un alcool gras, et sont fixées aux films de graphite (12 ; 12' ; 12" ; 12"') sous l'effet de la pression et de la température.

24. Joint plat selon une ou plusieurs des revendications 7 à 23,
**caractérisé en ce que**
les films métalliques (11 ; 11' ; 11'' ; 11''' ; 11'''') se composent d'un métal résistant à la corrosion / d'un alliage métallique résistant à la corrosion, à base d'aluminium ou d'un alliage d'aluminium ou à base de cuivre ou d'un alliage de cuivre.

25. Joint plat selon une ou plusieurs des revendications 7 à 24,
**caractérisé en ce que**
les films métalliques (11 ; 11' ; 11''; 11''' ; 11'''') ont une épaisseur comprise entre 0,005 mm et 1 mm.

26. Joint plat selon une ou plusieurs des revendications 6 à 25,
**caractérisé en ce que**
les films de graphite (12 ; 12' ; 12'' ; 12''') présentent une masse volumique apparente comprise entre 0,1 g/cm³ et 1,8 g/cm³ et une teneur en carbone de 90 % à 99,95 % en masse.

27. Joint plat selon une ou plusieurs des revendications 6 à 26,
**caractérisé en ce que**
les films de graphite (12 ; 12' ; 12" ; 12"') ont une épaisseur comprise entre 0,1 mm et 4,0 mm.

28. Joint plat selon une ou plusieurs des revendications 1 à 27,
**caractérisé en ce que**
le revêtement (10 ; 10') est un film polymère (10 ; 10') et se compose d'un matériau appartenant à la famille du polyarylétheréthercétone, du polyaryléthercétone, du sulfure de polyphénylène, du polyarylsulfone, du polyéthersulfone, du polyimide, du ployamide-imide ou des polymères fluorés.

29. Joint plat selon la revendication 28,
**caractérisé en ce que**
le film polymère (10 ; 10') se compose d'un matériau appartenant à la famille du polytétrafluoroéthylène, du polytrifluorochloroéthylène, du copolymère tétrafluoroéthylène-hexafluoropropylène, des copolymères de tétrafluoroéthylène avec perfluoroalkylvinyléther, des copolymères d'éthylène et de tétrafluoroéthylène ou du polyflorure de vinylidène.

30. Joint plat selon la revendication 29,
**caractérisé en ce que**
le film polymère se compose d'un polymère organique perfluoré.

31. Joint plat selon une ou plusieurs des revendications 1 à 30,
**caractérisé en ce que**
les films polymère (10 ; 10') formant le revêtement ( 10 ; 10') présentent une épaisseur comprise entre 0,005 mm et 1,0 mm.

32. Joint plat selon une ou plusieurs des revendications 1 à 31,
**caractérisé en ce que**
la ou les bordure(s) (3 ; 3') se compose(nt) de métal.

33. Joint plat selon la revendication 32,
**caractérisé en ce que**
la ou les bordure(s) (3 ; 3') se compose(nt) d'un métal résistant à la corrosion.

34. Joint plat selon une ou plusieurs des revendications 1 à 31,
**caractérisé en ce que**
la ou les bordure(s) (3 ; 3') se compose(nt) d'un polymère organique perfluoré.

35. Joint plat selon une ou plusieurs des revendications 1 à 34,
**caractérisé en ce qu'**
il présente une perméabilité inférieure/égale à 0,1 ml/min.
